# EUROPEAN PATENT SPECIFICATION

(11) **EP 3 131 139 B1**
(45) Date of publication and mention of the grant of the patent: **13.06.2018**
(21) Application number: 16182391.9
(22) Date of filing: 02.08.2016
(51) Int. Cl.: H01M 4/16, B21D 43/28, H01M 4/82, H01M 10/12, B21D 28/06

(54) **PLANT FOR MAKING PLATES FOR ELECTRIC STORAGE BATTERIES AND RELATIVE PROCESS FOR MAKING SAID PLATES**
ANLAGE ZUR HERSTELLUNG VON PLATTEN FÜR ELEKTRISCHE SPEICHERBATTERIEN UND ENTSPRECHENDES VERFAHREN ZUR HERSTELLUNG DIESER PLATTEN
INSTALLATION DE FABRICATION DE PLAQUES POUR BATTERIES DE STOCKAGE ÉLECTRIQUE ET PROCÉDÉ DE FABRICATION DESDITES PLAQUES

(30) Priority: 11.08.2015 IT UB20153071
(43) Date of publication of application: 15.02.2017
(73) Proprietor: SOVEMA GROUP S.p.A., 37069 Villafranca (IT)
(72) Inventor: Farina, Pietro, 37069 Villafranca (VR) (IT)
(74) Representative: Gallo, Luca

(56) References cited:
- WO-A1-94/01895
- GB-A- 2 057 921
- GB-A- 2 119 159
- US-A- 3 199 653
- US-A- 3 799 322
- US-A- 4 778 479
- US-A- 5 102 287
- US-A- 6 026 722
- US-A1- 2002 104 412

## Description

### Field of application

The present invention regards a plant for making plates for electric storage batteries and a relative process for making of said plates, according to the preamble of the respective independent claims.

The present plant and the process are intended to be employed in the production processes of electric storage batteries for producing plates starting from a continuous strip of lead grids.

The plates produced by means of the plant and the process, object of the present invention, are intended to make storage batteries for any one possible application and they are advantageously of reduced size with respect to those commonly employed in the automotive field or in the static storage battery field, so as to be particularly suitable for making storage batteries for electric bicycles, for toys or for similar applications that preferably require lead batteries with reduced size and weight.

The invention is therefore inserted in the context of the industrial field of production of lead batteries.

### State of the art

As is known, the lines for the industrial production of lead storage batteries comprise plants dedicated for the production of plates, and plants dedicated for the assembly of the plates within containment boxes with the obtainment of different electrode layers and for the formation of the electrical contacts.

The plants for producing plates for storage batteries for automobiles provide for obtaining a plurality of operations in succession on a continuous lead strip, obtaining a grid formed by lead filaments via molding or expansion.

The continuous strip thus shaped is coated with a paste of lead oxides by means of a suitable spreader machine; then, it is cut into sections for the formation of the single plates, which are then first subject to a drying process in a oven and then collected stacked in groups.

Once they have exited from the production plant, the plates organized in groups are further left to dry for a period of curing before being employed with positive or negative polarity in the assembly plants for the storage batteries, where they are organized in the cells of the box-like bodies and embedded in an electrolytic solution for the obtainment of the redox reactions necessary for the production of electrical energy.

The lead grids function both as electrical conductor and mechanical support of the paste of active material necessary for the electrochemical reactions.

The strip of grids can be obtained by means of different technologies and usually continuously (continuous grid making), in particular by means of expansion of a lead strip, by means of punching a lead strip or by means of continuous casting in a rotary drum mold.

In the first case of expansion technology, the grid is obtained by deforming the strip, penetrating it in succession with suitable shaped teeth. This technology allows obtaining high productivity without processing discards, but the grids that are obtained are not of optimal quality.

In the case of technology by means of punching, it is provided to use rigid punches which cyclically hit the strip at an underlying matrix which defines a slot at each punch, thus removing blocks thereof. Currently, static punching apparatuses are known in which the strip is made to advance step-by-step, and dynamic punching apparatuses are known in which the strip advances in nearly continuous manner. The latter category includes both apparatuses in which the punches are moved with a double oscillation motion (parallel and perpendicular to the strip), and apparatuses in which the punches are rigidly mounted on a roller coupled to a matrix roller equipped with slots. In the latter case, movable pushers are then provided that are capable of expelling the material removed during punching from the slots.

Some examples of continuous punching machines for a lead strip that provide for moving the incision mold to follow the advancing strip are described in the patents US 6,145,363 or WO 01/96043.

The formation technology for the continuous production of grids by means of casting is described for example in the patent US 4,544,014 and provides for the use of a machine for continuously casting a lead alloy melted on a rotary drum, having on the external peripheral surface a plurality of grooves distributed according to the design of the grid of the storage battery that one desires to make.

The molten lead is then distributed in the slots while a sliding block achieves a scraping on the drum parts surrounding the grooves.

The plants for producing plates for storage batteries for motor vehicles of known type provide for the use of a reel of continuous strip of grid, obtained for example as mentioned above.

The strip unwound from the reel is subjected to the action of spreading of a spreader machine, which provides for distributing a paste with lead oxide base only in the areas intended for the electrochemical reaction, for example leaving free the areas intended to form the electrical contacts (projections).

The spreader machines of known type, in accordance with a first embodiment, provide for the transport on a conveyor belt placed below a hopper equipped with spreading rollers.

A second known spreader machine provides that the grids are made to transit below the hopper by pushing them between two counter-rotating drive rollers. After having been coated with the paste with lead oxide base, they are made to pass through an extruder constituted by two parallel superimposed plates equipped with a cutting entrance, for the purpose of achieving the finish of the paste thicknesses that coat the grid on both faces.

Once coated with paste, the continuous strip then passes through a cutting machine, in which it is separated by suitable knives into single sections that form the single plates.

In fact the grids - once spreading and separation has occurred - usually take the name of plates.

The cutting machine can comprise a roller equipped with knives transverse to the advancement direction of the strip, or even with circular knives parallel to the advancement direction of the strip, which - when suitably phased with the impressions of the grids designed in succession on the strip - operate on the strip itself by separating it into sections corresponding to single plates (e.g. by operating at the projections, in order to finish the edges and/or for separating grid-like areas of contiguous plates).

Otherwise, the cutting machine can provide for the passage of the strip between two opposite vertical knives provided with reciprocating motion, respectively upward and downward, in order to separate the plates with scissors-type action.

The plants for forming plates for storage batteries of motor vehicles of known type then provide for a drying oven for the single separate plates, in which the plates are subjected to a first drying, usually at a temperature comprised between 180 and 220 degrees.

The plates thus obtained are then picked up and stacked, in an automatic manner, by means of handling devices, usually employing suction suckers.

The transfer of the plates from one machine to the other within the plant for producing plates for storage batteries of motor vehicles occurs by means of motorized conveyor belts, usually achieved with belts wound as a ring on pulleys and made of plastic or metal material depending on whether the transport occurs outside or inside the oven.

The plates for storage batteries in the automotive field are transferred from one conveyor to another and from one machine to another in an organized and aligned manner, due to their size which determines a sufficiently stable positioning thereof on the conveyor belts.

Also the cutting operation is not usually susceptible of moving on the conveyor belt, in an undesired manner, the single plates defined by the cutting of the continuous lead strip.

At most, plate alignment devices can be provided, for example of the type described in the patent US 5918725; generally, though, the plants of the prior art for automobile storage batteries can manage the single plates without the same losing alignment in the passage from one strip to the other or following the cutting operations.

The plants and the processes of known type for making plates of size smaller than those for automotive storage batteries, i.e. for example for electric bicycle storage batteries, and more generally for example for making plates with height on the order of 3.5 - 10 cm and depth on the order of 3.5 - 9cm, are unable to make transfers from one conveyor to another, or following the cutting operations starting from a continuous strip, maintaining the single plates substantially aligned. Consequently if such plates of reduced size are separated after spreading, one would witness a disordered advancement thereof without the possibility to be able to manage them automatically, in order to stack them in groups at the end of the plant.

Consequently, the plants for producing plates of reduced size provide for not separating the strip after the spreading into single plates, but rather they maintain the plates assembled in multi-plate elements comprising multiple side-by-side plates both in the advancement direction of the strip and in transverse direction. In this manner, multi-plate elements are able to proceed in an ordered manner between the different stations of the plant. At the plant outlet, the multi-plate elements are then manually gripped and stacked in groups of superimposed multi-plate elements, which are sent to the curing step.

Once the curing step has terminated, the multi-plate single elements are manually subjected to single cutting operations for separating the single plates that compose each multi-plate element.

The manual operations employed in the production of plates of reduced size of course involve high production costs. In addition, the size quality and uniformity of the plates depends on the ability of the operator to cut the elements in a correct and perfectly repeatable manner.

The patent application WO 94/01895 describes a plant of known type for making plates for electric storage batteries, which comprises a spreading machine for spreading an active material paste on a strip of grids, obtaining a continuous succession of plates joined together, and a cutting device for separating the continuous strip into multiple rows of plates.

The plant of known type described in WO 94/01895 nevertheless does not allow optimizing the production costs of the plates, since it is still necessary to execute multiple manual operations. GB2119159 disclose a method for manufacturing battery plates.

### Presentation of the invention

In this situation, the problem underlying present invention is therefore that of overcoming the drawbacks of the plants of known type by providing a plant for making plates for electric storage batteries and a relative process for achieving said plates which allow obtaining groups of stacked plates ready for curing in an entirely automatic manner, even with plates of reduced size with respect to the size of the plates conventionally employed in the automotive industry.

A further object of the present finding is to provide a plant for making plates for electric storage batteries and a relative process for achieving said plates which are able to obtain the separate plates with high and constant quality, in particular distinguished by plates of substantially identical size.

A further object of the present finding is to provide a plant for making plates for electric storage batteries which is structurally simple and entirely reliable in operation.

### Brief description of the drawings

The technical characteristics of the finding, according to the aforesaid objects, can be clearly seen in the contents of the below-reported claims and the advantages thereof will be more evident from the following detailed description, made with reference to the enclosed drawings, which represent a merely exemplifying and non-limiting embodiment of the invention, in which:
Figs. 1A and 1B respectively show a side view and a plan view of one embodiment of a plant for making plates for electric storage batteries according to the present invention;
Fig. 2 shows a detail of the plant according to the invention relative to a machine for cutting the continuous strip into sections of side-by-side plates, illustrated in a perspective view with the continuous strip formed by a continuous succession of plates shown at the inlet;
Fig. 3 shows the machine for cutting the continuous strip of figure 2 in a side view, with some parts removed in order to better illustrate other parts;

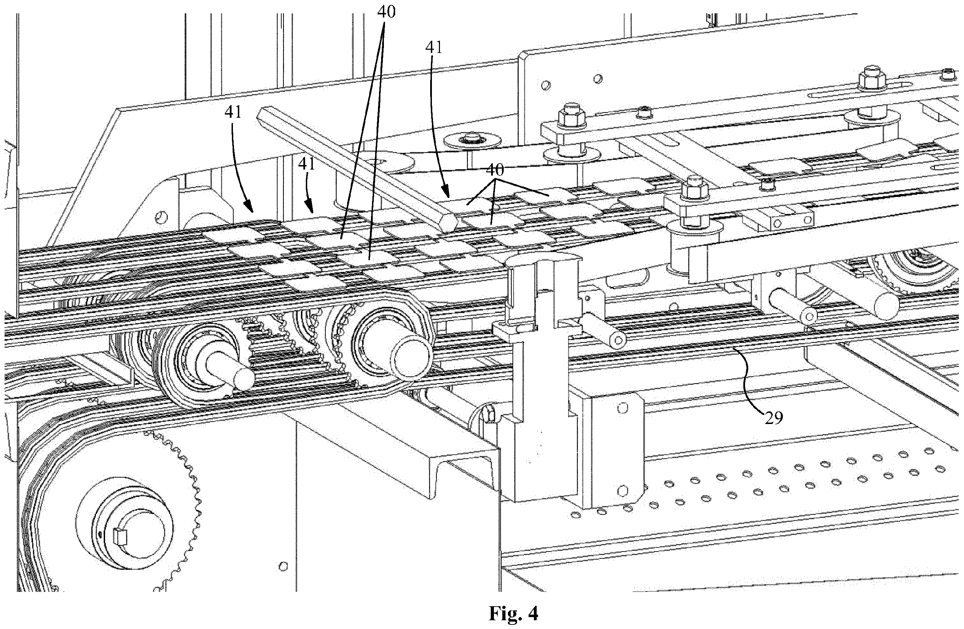

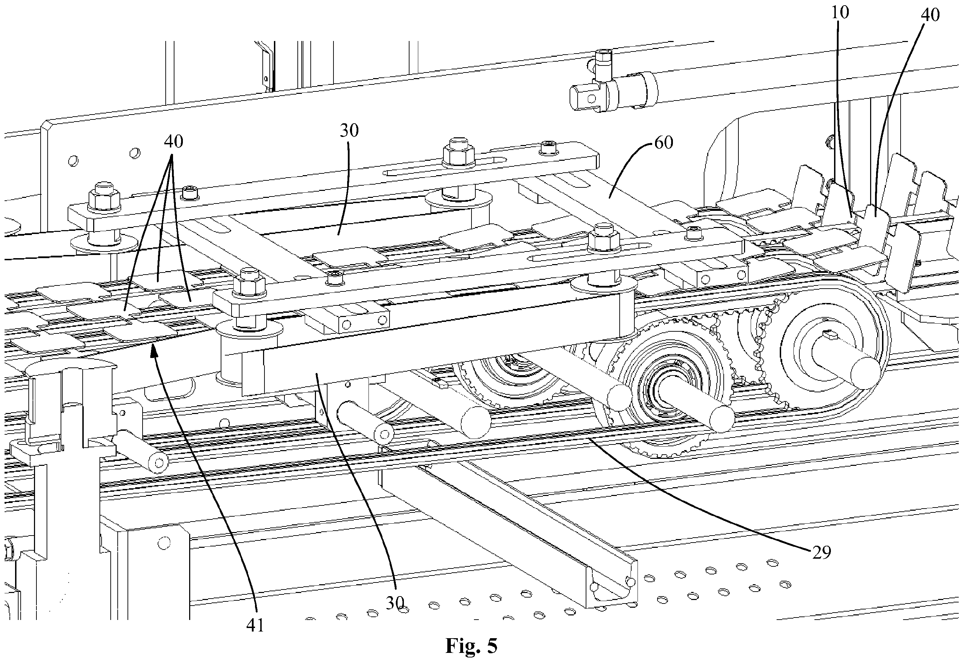

Figs. 4 and 5 show a detail of the plant according to the invention relative to transport means of the sections of side-by-side plates downstream of an oven and with lateral alignment means underlined;

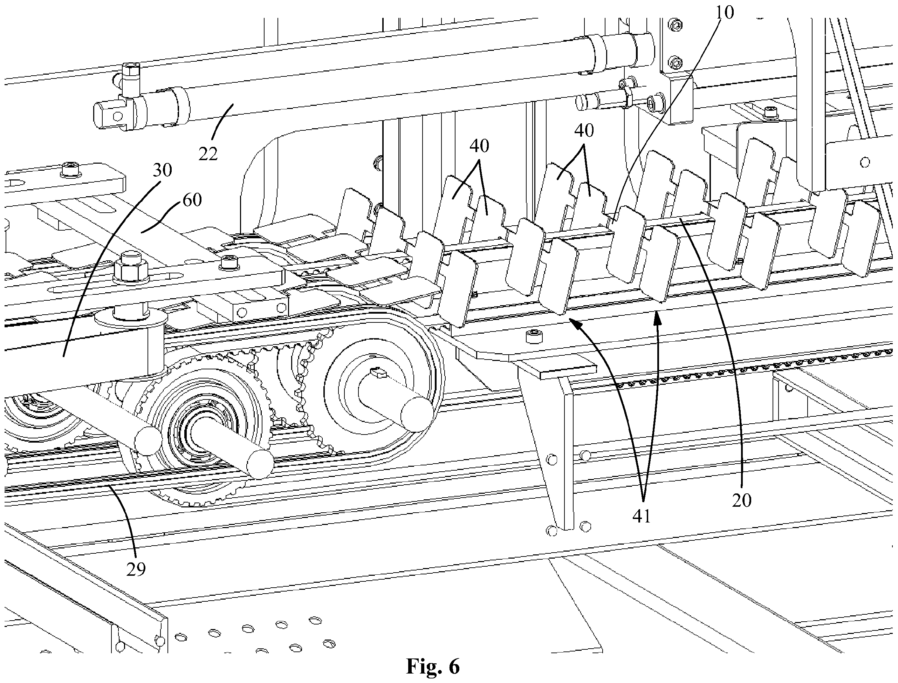

Fig. 6 shows a detail of the plant according to the invention relative to the transport means for the plates in the passage between two different belts with the plate sections that are moved from a horizontal position to a vertical position;

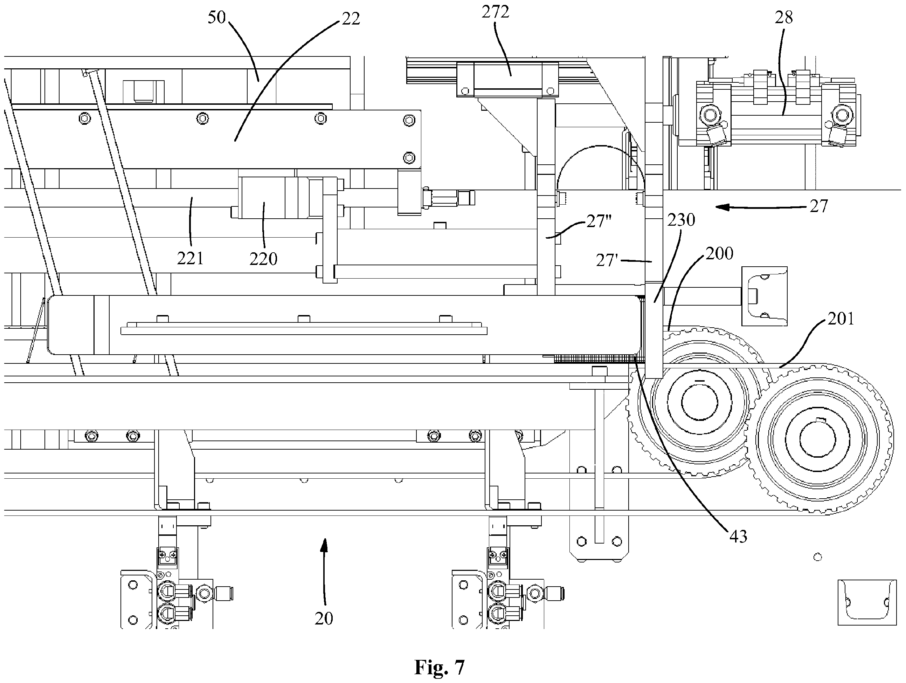

Fig. 7 shows a detail of the conveyor belts of the plates in vertical position of figure 6, in a sectional side view;

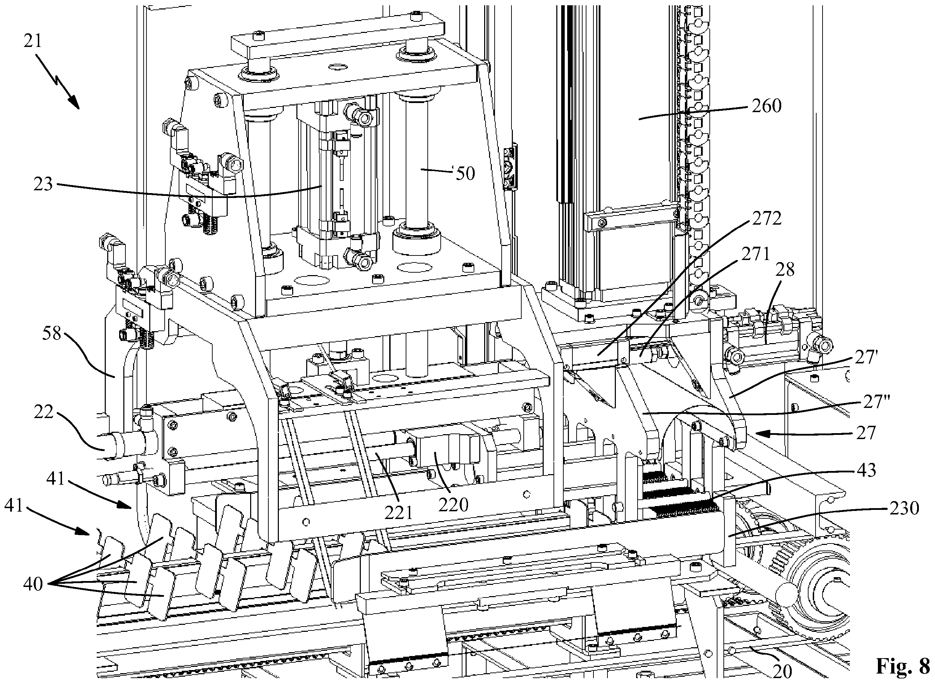

Fig. 8 shows a detail of the plant according to the invention relative to storage means of sections of side-by-side plates;

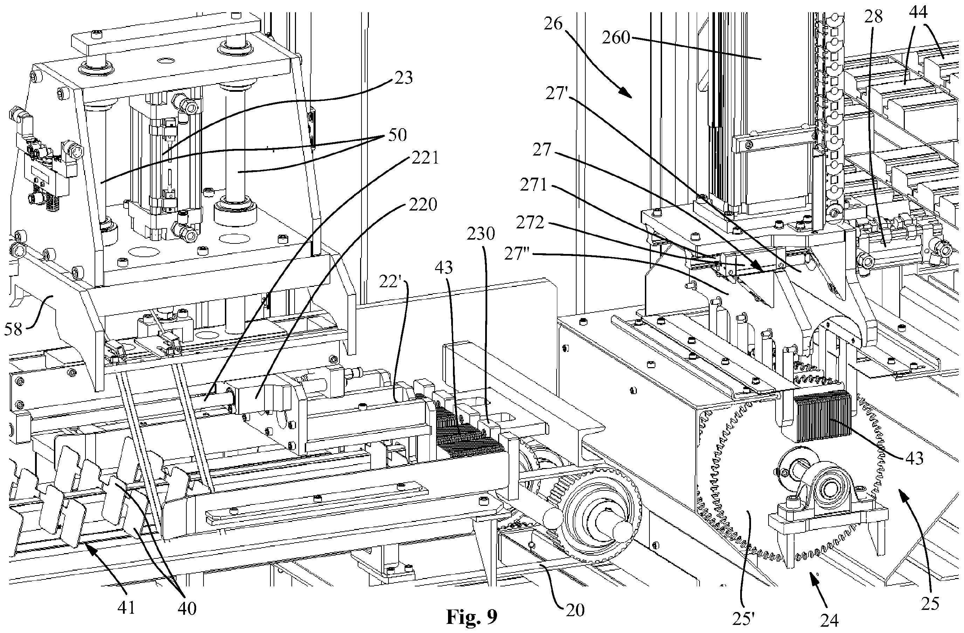

Fig. 9 shows a detail of the plant according to the invention relative to a cutting station of sections of side-by-side plates;
Fig. 10 shows a further detail of the plant according to the invention relative to the aforesaid cutting station of sections of side-by-side plates;

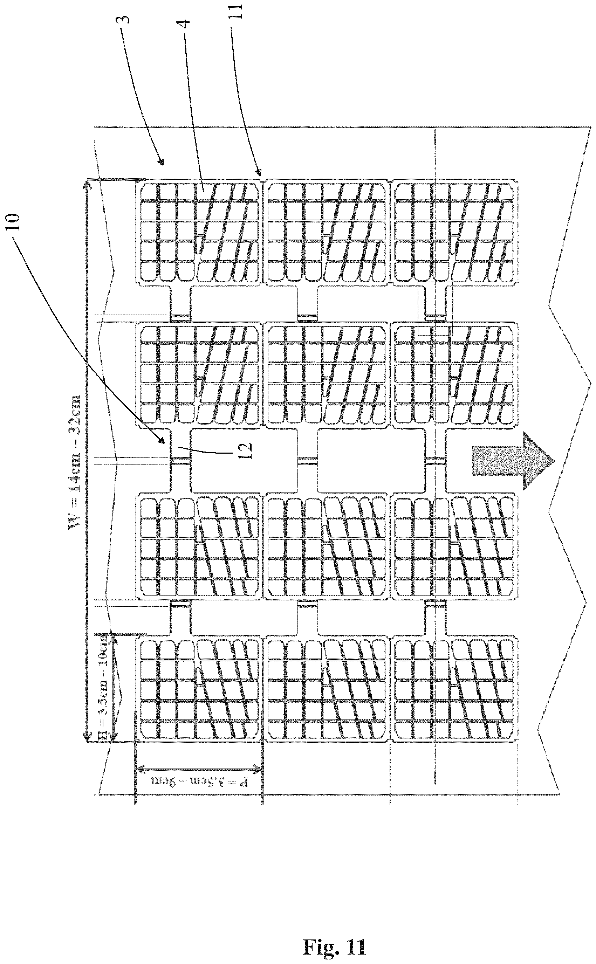

Fig. 11 shows a detail of the plant according to the invention relative to a continuous strip of lead grids.

### Detailed description of a preferred embodiment

With reference to the enclosed drawings, reference number 1 overall indicates a plant for making plates for electric storage batteries, object of the present invention.

It is intended to be advantageously employed in order to make plates of storage batteries of size smaller than those of conventional automotive storage batteries, such as for electric bicycles, for toys or for similar applications.

In particular, the plates 40 produced by means of the plant and the process according to the invention have size preferably comprised in the following measurement intervals: the height H is contained in the interval 3.5 - 10 cm (without counting the height of the electrical contact projection), the depth P is comprised in the interval 3.5 - 9 cm.

The present plant 1 is intended to make groups of packed and separate plates 44 ready to be subjected to step of curing, starting from a continuous strip 3 of lead grids 4.

The latter is advantageously wound in a reel 5 (decoiler) placed upstream of the plant 1, which is preferably horizontally arranged on a rotatable motorized structure, with vertical axis.

The reel 5 unwinds the continuous strip 3 and feeds spreading means 6, adapted to spread a paste of active material on at least part of the grids 4 at a mesh thereof composed of filaments joined together, thus obtaining a continuous succession of plates 40 joined together.

The paste is released by the spreading means 6 only in the mesh-like areas that are intended to come into contact with the electrolytic solution once the plates 40 are inserted in the casing of the finished storage battery.

The spreading means 6 comprise a spreader machine 6' with entirely conventional structural and operating principle; for this reason, it is not described in detail since it is well known to the man skilled in the art. It can for example comprise a hopper 7 for feeding the paste on the continuous strip supported on the lower part by a steel roller.

The spreading means 6 can provide for covering the areas of the grids that have paste spread thereon with paper sheets released by rolls 9.

Upon exiting the spreading means 6, the continuous strip 3 is at this point formed by a plurality of plates 40 joined together.

More in detail, the plates 40 are joined both by joints 10 transverse to the advancement direction of the continuous strip 3 and by longitudinal joints 11 parallel to the advancement direction in the continuous strip 3.

More in detail, the transverse joints 10 are made from portions of grids lacking paste and intended to form the electrical connection contacts, hereinbelow indicated as projections 12; the longitudinal joints 11 are instead made from the adjacent sides of the grids 4, coated with paste, and joined together through a connection line.

The plant comprises transport means 13 which support the strip with different mechanical members that follow each other from the reel 5 to the final cutting station, as better specified hereinbelow.

More in detail, from the reel 5 to the spreading means 6, the strip 3 in part advances also through air, supported by the reel 5 itself or by a column provided with idle rollers set adjacent to the reel and by a plurality of support rollers idly mounted at the inlet of the spreader machine 6'.

After the spreader machine 6, the transport means 13 provide for at least one first conveyor belt 14, advantageously obtained with a plurality of first belts wound as a loop on pulleys (of which one is motorized). The first conveyor belt 14 supports the strip of plates 40 with which it feeds the cutting means 15 adapted to separate, by means of knives, the continuous strip 3 of plates 40 into single sections 41 of side-by-side plates, whose characteristics will be indicated in detail hereinbelow.

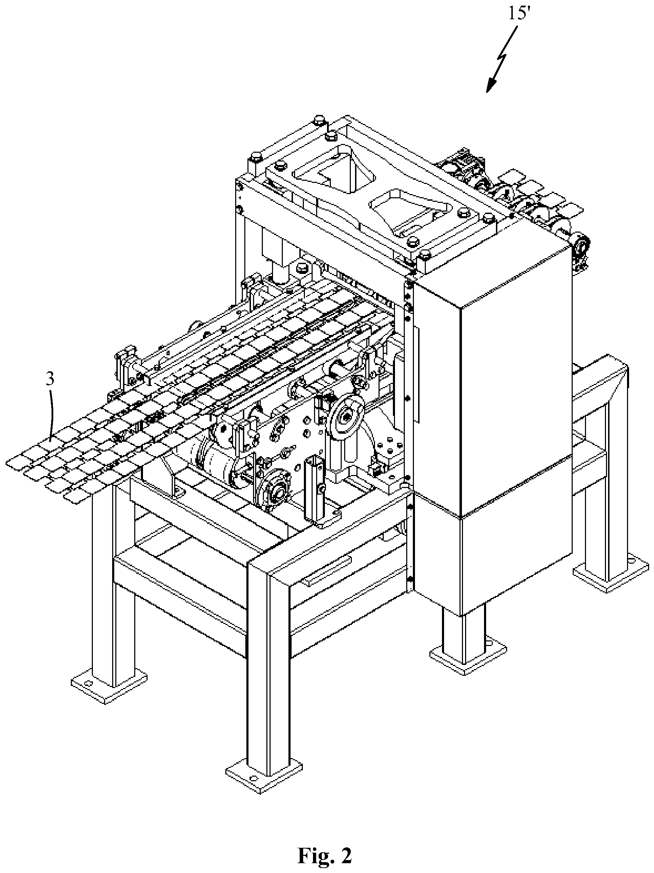

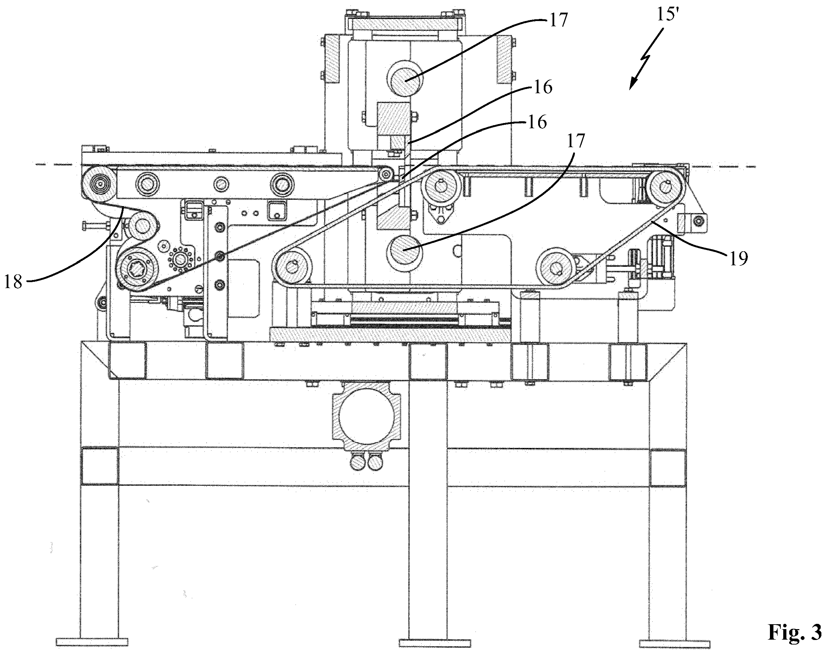

The cutting means 15 are then placed downstream of the spreading means 6 and advantageously comprise a cutting machine 15' illustrated in detail in figures 2 and 3, and entirely conventional in the structure and operation thereof and for this reason not described in detail, since it is well known to the man skilled in the art. It can for example comprise two knives 16, of which one is above the strip 3 and one below the strip and actuatable to be moved against the strip 3 and with repetitive movement in order to separate it into sections of side-by-side plates 41 (hereinbelow sections 41 for the sake of brevity).

Advantageously, each knife 16 is supported by a frame moved by an eccentric 17 in order to complete both a vertical cutting movement and a horizontal following movement of the advancing strip 3 in order to cut it substantially without relative horizontal motion.

At the cutting machine 15', the continuous strip 3, first, and the sections 41, are supported by corresponding second 18 and third 19 conveyor belt of the transport means 13 placed in succession with each other. These are superimposed at the knives 16, leaving a horizontal space in which the knives 16 in their reciprocating movement are inserted. More in detail, the upper knife 16, by descending on the continuous strip 3, pushes the rear edge of the cut section 41 against the surface of the third conveyor belt 19, which takes the sections 41 advantageously at a speed greater than that of the second conveyor belt 18 in order to separate them from each other.

In accordance with the idea underlying the present invention, the cutting means 15 separate continuous strip 3, transverse to its advancement direction, into sections 41 formed by two or more transversely side-by-side plates 40 that are connected to each other by the transverse joints 10.

The latter are provided at the electrical contact projections and therefore are in the form of thinned transverse joints 10 with respect to the extension of the sides of the single plates 40 which have a substantially, square, rectangular or more generally quadrangular shape.

In accordance with the embodiment reported in the enclosed figures, the continuous strip 3 is formed in the direction of its advancing from a succession of rows of sections 41, each composed of four plates 40.

The sections 41 can nevertheless also be obtained with double rows of side-by-side plates without departing from the protective scope of the present patent.

The transverse size W of the continuous strip 3 and thus of the section 41 is comprised in the interval from 14 cm to 32 cm while the transverse size of the single plates corresponding in the case of the enclosed figures to their height H is comprised between 3.5 - 10 cm. Preferably the same plates also have longitudinal size along the strip corresponding to their depth P comprised between 3.5 and 9 cm.

In addition, according to the invention, the transport means 13 also comprise at least one final conveyor belt 20 which is operatively associated with storage means 21.

The latter comprise at least one first actuator 22 (pneumatic piston) movable with parallel reciprocating motion along the aforesaid final conveyor belt 20 so as to pack against an abutment element 230, in groups 43, the plate sections 41 which advance on the final conveyor belt 20.

The plant according to the invention also comprises a cutting station 24, which is provided with at least one cutting tool 25 and with at least one handling device 26, the latter provided with a pick-up gripper 27 susceptible of moving, in a repetitive manner, the groups of plate sections 43 packed on the abutment element 230 against the cutting tool 25 in order to separate the groups of plate sections 43 into groups of separate plates 44.

Downstream of the cutting station 24, a palletizer 240 is finally provided in which the groups of plate sections 43 are stored.

In accordance with a possible embodiment, the storage means 21 comprise a first support structure 58, which supports the first actuator 22 and is actuatable to be moved by means of a second actuator 23 along vertical guides 50, between a first raised position, in which the first actuator 22 is outside the interference of the sections 41 that advance along the final conveyor belt 20, and a first lowered position, in which the first actuator 22 is susceptible of intercepting the sections 41 that advance along the final conveyor belt 20.

In such lowered position, the first actuator 22 is actuatable to compact, against the abutment element 230, the group of sections 43 that are situated interposed between a compression pallet 22' thereof and the abutment element 230 itself.

More in detail the first actuator 22 moves, along guides 221, a trolley 220 on which the pallet 22' is mounted.

More in detail, the first actuator 22 is a pneumatic piston bearing the compression pallet 22' fixed at one end of the stem.

As is visible in the figures, the first actuator 22 has the stem directed towards the abutment element 230, such that after having been lowered (due to the descent of the first support structure 58 on which it is mounted) it can compress, being extended against the abutment element 230, the sections 41 that are moved beyond the pallet 22'.

Advantageously, the plant comprises a counter 60 preferably placed at the final conveyor belt 20, or in the case of the enclosed figures associated with the intermediate belt 29 that precedes the final belt, and advantageously placed above the strip in order to prevent the dirtying thereof, susceptible of actuating the first actuator 22 to compact the group of sections 41 against the abutment element 230 upon reaching a pre-established number of sections 41.

For such compaction operation, first the first actuator 22 is lowered to a height susceptible of interfering with the sections 41 which advance on the final conveyor belt 20 and then it is actuated to be horizontally moved in order to compact the sections 41 in a group 43 of a predefined number of elements.

The counter 60 can be more properly connected to a logic control unit, which oversees various operations of the plant 1 and which, once the number of sections 41 to be packed has been reached, drives the first and the second actuator 22, 23 such that the group 43 of plate sections 41 is formed on the abutment element 230.

Advantageously, for an easy compaction by the pallet 22' of the first actuator 22, the final conveyor belt 20 supports the sections 41 in tilted or vertical position.

For such purpose, the final conveyor belt 20 comprises parallel belts which support the sections 41 of plates 40 in tilted or vertical position, hung at the thinned transverse joints 10. In substance, the weight of the sections 41 is susceptible of arranging the same sections 41 in position vertically hung or at least tilted in abutment against a lower belt.

Advantageously, the final conveyor belt 20 comprises at least one upper belt 200, which supports the sections 41 at an intermediate joint 10 thereof, advantageously median, and at least one lower belt 201 (and preferably two lateral lower belts) which supports the sections 41 at a rear edge thereof arranged on the lower part with the sections 41 hung.

Preferably, the cutting tool 25 is formed with one or more circular blades 25'. The number of blades corresponds with the transverse joints 10 to be cut for separating the groups of sections 43 into single groups of plates 44.

The distance between the circular blades 25' is therefore equal to the distance between the transverse joints 10 of the plate sections 41 to be divided.

In accordance with a possible embodiment illustrated in the enclosed figures, the handling device 26 comprises, in a manner *per se* easily comprehensible for the man skilled in the art and hence not described in detail, two guide axes 260, 261 orthogonal to each other, of which the first is vertical and the second horizontal, along which two corresponding third and fourth actuator 262 and 263 move the gripper 27 in a Cartesian plane.

More in detail, the gripper 27 is actuatable to be moved by means of the third actuator 262, in particular constituted by an electric motor, between at least one second raised position, in which the gripper 27 is moved along the vertical axis 260 to a height of non-interference above the final conveyor belt 20 in a manner so as to not interfere therewith and with the plate sections 41, and a second lowered position, in which the gripper 27 is susceptible of picking up the group of sections 43 piled up against the abutment element 230.

After the gripper 27 has taken the group of sections 43 and after it has been brought back into a raised position, the gripper 27 is then actuatable to be moved due to the actuation of a fourth actuator 263 (advantageously it too constituted by a motor) from the pick-up position above the abutment element 230 to a cutting position at the cutting tool 25, by sliding along the horizontal axis 261. At the cutting position, the group of sections 43 is subjected to the action of separation of such tool 25 in order to make separate groups of plates 44.

Advantageously, the movement of the group of sections 43 from the abutment element 230 to the cutting tool 25 firstly involves the lifting of the gripper 27 by means of the actuation of the third actuator 262, and then the movement of the gripper 27, for example with simple horizontal translational motion, by means of the fourth actuator 263, towards the cutting tool 25.

Of course, the kinematic action mechanism of the handling device 26 for moving the groups of sections 43 that are progressively formed on the abutment element 230 towards the cutting station 24 can be different from that described above, given that the man skilled in the art can easily vary the movement mechanism of the handling device 26.

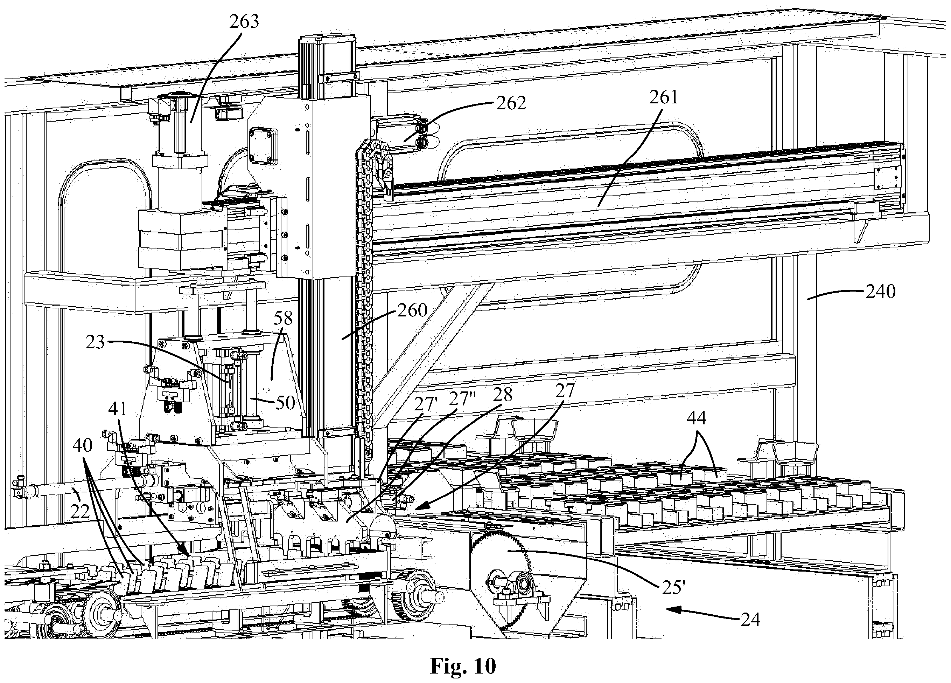

Figure 10 shows a palletizer 240 for storing the single groups of sections 43 that are progressively formed following the cutting with the side-by-side blades 25'.

Advantageously, the gripper 27 can be moved between the open and closed conditions by means of a suitable fifth actuator 28 constituted by a pneumatic piston.

More in detail, the gripper comprises a fixed plate 27' and a movable plate 27" slidably mounted on guides 271 due to the ball bearing sliding trolley 272.

In accordance with one advantageous characteristic of the invention, the transport means 13 comprise an intermediate conveyor belt 29 placed upstream of the final conveyor belt 20 and downstream of the cutting machine 15' and susceptible of supporting the plate sections 41 in horizontal position.

Such intermediate conveyor belt 29 is flanked on two sides by two motorized centering strips 30, which operate on the transverse ends of the plate sections 41 in order to center them on the intermediate conveyor belt 29.

In this manner, when the sections 41 are transferred from the intermediate conveyor belt 29 to the final conveyor belt 20, the belts of the latter belt are correctly positioned at the joints 10, allowing the movement of the sections 41 from the horizontal position to a vertical or tilted position, hung by the joints 10.

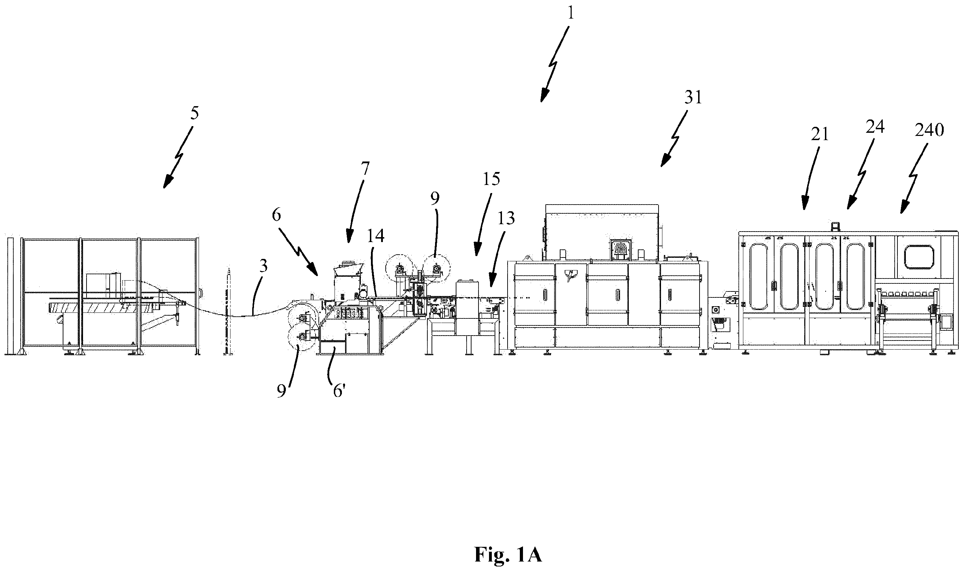

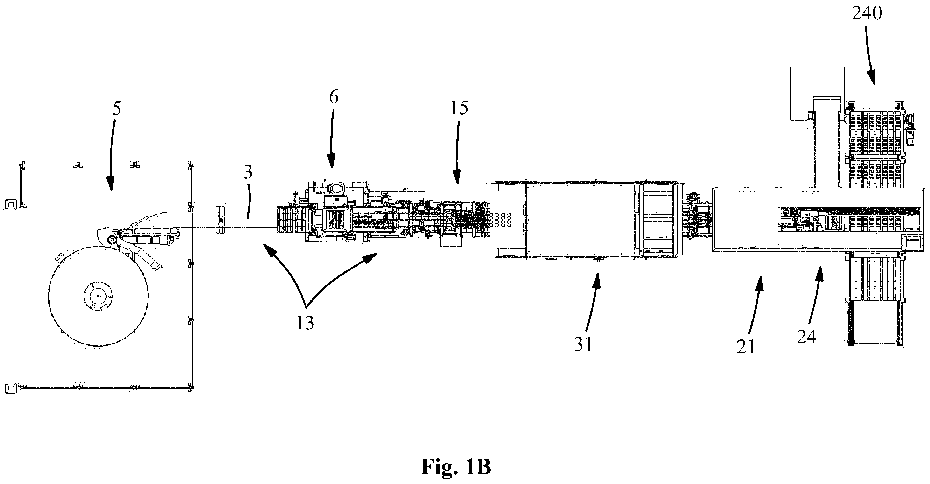

The plant 1 also comprises, in a manner *per se* entirely conventional, a drying oven indicated with 31 in figure 1. The transport means associated with such oven 31 comprise a motorized belt provided with belts made of metal resistant to the temperatures of the oven, usually on the order of 180-220 degrees.

Inside the oven, the plate sections 41 are at least partially dried, by solidifying the active material paste on the grids.

Advantageously, such conveyor belt with the metal belts receives the sections from the third conveyor belt 19 associated with the cutting machine 15' and transfers it to the intermediate conveyor belt 29.

Also forming the object of the present invention is a process for making plates for electric storage batteries, which in particular can advantageously but not exclusively employ the above-described plant 1; for the sake of description simplicity, the same reference numbers and nomenclature used above will be maintained hereinbelow.

The aforesaid process provides for the following operations, according to the idea underlying the present invention.

A step of spreading an active material paste on the grids 4, which are connected to each other in succession in the continuous lead strip 3, obtaining a continuous succession of plates supported by the transport means 13 in an advancement direction.

Such operation is carried out by the spreading means 6, illustrated above.

Following the spreading, the process then provides for a cutting step for separating, by means of knives 16, the continuous strip 3 into single plate sections 41, advantageously formed by rows of plates transverse to the advancement direction of the continuous strip 3.

The aforesaid cutting step, according to the invention, separates the continuous strip 3, operating by means of cuts transverse to the advancement direction of the strip 3, and thus producing sections 41 of two or more transversely side-by-side plates 40 that are connected to each other by transverse joints 10.

The process then provides for a storage step, in which, by means of the first actuator 22, the plate 40 sections 41 which advance on the transport means 13 are packed in groups 43 formed by a predefined number of sections 41 against the abutment element 230.

A subsequent separation step then takes place, in which the handling device 26 of the provided cutting station 24 moves, in a repetitive manner, the groups 43 of plate 40 sections 41 packed on the abutment element 230 against the cutting tool 25, which separates the groups 43 of plate 40 sections 41 supported by the gripper 27 of the handling device 26 into single groups 44 of separate plates 40.

The finding thus conceived therefore attains the pre-established objects.

## Claims

1. Plant (1) for making plates for electric storage batteries, which comprises:
- at least one reel (5) of continuous strip (3) of lead grids (4);
- spreading means (6) for spreading a paste of active material on at least part of said grids (4), obtaining a continuous succession of plates (40) joined together;
- cutting means (15) for separating, by means of knives (16), said continuous strip (3) into sections (41);
- storage means (21) for stacking groups (43) of plate (40) sections (41);
- transport means (13) for advancing said continuous strip (3) and said plates (40) between said spreading means (6), said cutting means (15) and said storage means (21); said cutting means (15) transversely separating said continuous strip (3), upon advancement of said strip (3), into sections (41) of at least two or more transversely side-by-side plates (40) that are connected to each other;
**characterized in that**:
- said transport means (13) comprise at least one final conveyor belt (20) associated with said storage means (21),
- said storage means (21) comprise at least one first actuator (22), movable along said final conveyor belt (20) with reciprocating motion susceptible of packing, in groups (43) against an abutment element (230), said plate (40) sections (41) which advance on said final conveyor belt (20);
- said plant (1) also comprises a cutting station (24), which is provided with at least one cutting tool (25) and with at least one handling device (26) provided with a pick-up gripper (27) susceptible of moving, in a repetitive manner, said groups (43) of plate (40) sections (41), packed on said abutment element (230), against said cutting tool (25) in order to separate said groups (43) of plate sections (41) into groups (44) of separate plates (40).

2. Plant (1) according to claim 1, **characterized in that** said final conveyor belt (20) supports said sections (41) in tilted or vertical position.

3. Plant (1) according to claim 2, **characterized in that** the plates (40) of said plate (40) sections (41) are joined together by thinned transverse joints (10) adapted to form the electrical contacts of the single plates (40); said final conveyor belt (20) comprising parallel belts which support said plate (40) sections (41) in tilted or vertical position, hung at said thinned transverse joints (10).

4. Plant according to claim 3, **characterized in that** said cutting tool (25) comprises one or more circular blades (25') spaced from each other at said thinned transverse joints (10) between the side-by-side plates (40) of said groups (43) of plate (40) sections (41).

5. Plant according to any one of the preceding claims, **characterized in that** said plate (40) sections (41) are separated from said continuous strip (3) into rows of transversely side-by-side single plates (40).

6. Plant (1) according to claim 1, **characterized in that** said storage means (21) comprise at least one first support structure (58), which supports said first actuator (22) and is actuatable to be moved by means of a second actuator (23) between a first raised position, in which said first actuator (22) is arranged outside the interference bulk of said sections (41) that advance along said final conveyor belt (20), and a first lowered position, in which said first actuator (22) is susceptible of intercepting said sections (41) that advance along said final conveyor belt (20) and is actuatable to compact, against said abutment element (230), the group (43) of sections (41) interposed between said first actuator (22) and said abutment element (230).

7. Plant (1) according to claim 1, **characterized in that** said storage means (21) comprise at least one counter (60) placed at said final conveyor belt (20) susceptible of actuating said first actuator (22) to compact said group (43) of sections (41) against said abutment element (230) upon reaching a pre-established number of sections (41).

8. Plant (1) according to claim 1, **characterized in that** said handling device (26) comprises at least one second support structure, which supports said pick-up gripper (27) and is actuatable to be moved by means of a third actuator (262) between at least one second raised position, in which said pick-up gripper (27) is at a height of non-interference with said sections (41) on top of said final conveyor belt (20) and a second lowered position, in which said pick-up gripper (27) is susceptible of picking up said group (43) of sections (41) piled up against said abutment element (230), said second support structure being actuatable to be moved, in said second raised position, from a first position at said abutment element (230) to a second position at said cutting tool (25).

9. Plant according to claim 1, **characterized in that** said transport means (13) comprise:
- at least one intermediate conveyor belt (19) placed upstream of said final conveyor belt (20) and downstream of said cutting means (15) and susceptible of horizontally supporting said plate (40) sections (41);
- at least two centering strips (30) arranged laterally with respect to said intermediate conveyor belt (29), such centering strips (30) operating on the transverse ends of said plate (40) sections (41) in order to center them on said intermediate conveyor belt (29).

10. Process for making plates for electric storage batteries, which comprises:
- at least one step of spreading an active material paste on grids, which are connected to each other in succession in a continuous lead strip (3), obtaining a continuous succession of plates (40) supported by transport means (13) in an advancement direction;
- at least one cutting step for separating, by means of knives (16), said continuous strip (3) into sections (41);
said cutting step separating said continuous strip (3) with cuts transverse to the advancement direction of said continuous strip (3), producing sections (41) of at least two or more transversely side-by-side plates (40) that are connected to each other;
said process being **characterized in that** it also comprises:
- a storage step, in which said plate (40) sections (41) which advance on said transport means (13) are packed against an abutment element (230), in groups (43) composed of a predefined number of sections (41), by means of at least one first actuator (22) movable along said final conveyor belt (20) with reciprocating motion;
- a separation step, in which at least one handling device (26) provided with a pick-up gripper (27) moves, in a repetitive manner, said groups (43) of plate (40) sections (41) packed on said abutment element (230) against a cutting tool (25) which separates said groups (43) of plate (40) sections (41) into single groups (44) of plates (40) separated from each other.

## Patentansprüche

1. Anlage (1) zur Herstellung von Platten für elektrische Speicherbatterien, die Folgendes umfasst:
- mindestens eine Rolle (5) Endlosband (3) aus Bleigittern (4);
- Streichvorrichtungen (6), um mindestens einen Teil der genannten Gitter (4) mit einer Paste aus aktivem Stoff zu bestreichen, wobei eine kontinuierliche Aufeinanderfolge von miteinander verbundenen Platten (40) erzeugt wird;
- Schneidvorrichtungen (15) zum Trennen des genannten Endlosbands (3) mit Messern (16) in Abschnitte (41);
- Lagervorrichtungen (21) zum Stapeln von Gruppen (43) von Abschnitten (41) von Platten (40);
- Fördervorrichtungen (13) für den Vorschub des genannten Endlosbands (3) und der genannten Platten (40) zwischen den genannten Streichvorrichtungen (6), den genannten Schneidvorrichtungen (15) und den genannten Lagervorrichtungen (21);
wobei die genannten Schneidvorrichtungen (15) das genannte Endlosband (3) quer zur Vorschubrichtung des genannten Bands (3) in Abschnitte (41) mit mindestens zwei oder mehr quer nebeneinander liegenden und miteinander verbundenen Platten (40) trennen;
**dadurch gekennzeichnet, dass**:
- die genannten Fördervorrichtungen (13) mindestens ein mit den genannten Lagervorrichtungen (21) verbundenes Endförderband (20) umfassen,
- die genannten Lagervorrichtungen (21) mindestens einen ersten entlang des genannten Endförderband (20) mit abwechselnder Bewegung beweglichen Stellantrieb (22) umfassen, der geeignet ist, die auf dem genannten Endförderband (20) beförderten genannten Abschnitte (41) von Platten (40) in Gruppen (43) gegen ein Anschlagelement (230) zu packen;
- wobei die genannte Anlage (1) außerdem eine Schneidstation (24) umfasst, die mit mindestens einem Schneidwerkzeug (25) und mit mindestens einem mit einer Entnahmezange (27) ausgestatteten Manipulator (26) ausgestattet ist, der geeignet ist, die genannten Gruppen (43) von Abschnitten (41) von Platten (40), die auf dem genannten Anschlagelement (230) gepackt sind, auf wiederholte Weise gegen das genannte Schneidwerkzeug (25) zu bewegen, um die genannten Gruppen (43) von Abschnitten (41) von Platten in Gruppen (44) getrennter Platten (40) zu trennen.

2. Anlage (1) nach Anspruch 1, **dadurch gekennzeichnet, dass** das genannte Endförderband (20) die genannten Abschnitte (41) in geneigter oder vertikaler Position trägt.

3. Anlage (1) nach Anspruch 2, **dadurch gekennzeichnet, dass** die Platten (40) der genannten Abschnitte (41) von Platten (40) miteinander durch verjüngte Querverbindungen (10) zusammengefügt sind, die geeignet sind, die elektrischen Kontakte der einzelnen Platten (40) zu bilden; wobei das genannte Endförderband (20) parallele Riemen umfasst, die die genannten Abschnitte (41) von Platten (40) in geneigter oder vertikaler Position hängend auf den genannten verjüngten Querverbindungen (10) halten.

4. Anlage nach Anspruch 3, **dadurch gekennzeichnet, dass** das genannte Schneidwerkzeug (25) eine oder mehrere auf den genannten verjüngten Querverbindungen (10) zueinander im Abstand befindliche kreisförmige Messer (25') zwischen den nebeneinander liegenden Platten (40) der genannten Gruppen (43) von Abschnitten (41) von Platten (40) umfasst.

5. Anlage nach irgendeinem der vorangegangenen Ansprüche, **dadurch gekennzeichnet, dass** die genannten Abschnitte (41) von Platten (40) von dem genannten Endlosband (3) in Reihen einzelner quer nebeneinander liegender Platten (40) getrennt sind.

6. Anlage (1) nach Anspruch 1, **dadurch gekennzeichnet, dass** die genannten Lagervorrichtungen (21) mindestens eine erste Trägerstruktur (58) umfassen, die den genannten ersten Stellantrieb (22) trägt und betätigt werden kann, um sich mit Hilfe eines zweiten Stellantriebs (23) zwischen einer ersten erhobenen Position, in der der genannte erste Stellantrieb (22) außerhalb des Berührungsbereichs der genannten Abschnitte (41), die entlang des genannten Endförderbands (20) befördert werden, angeordnet ist, und einer ersten gesenkten Position, in der der genannte erste Stellantrieb (22) geeignet ist, die genannten Abschnitte (41) zu berühren, die entlang des genannten Endförderbands (20) befördert werden, und betätigt werden kann, um die Gruppe (43) von Abschnitten (41) zwischen dem genannten ersten Stellantrieb (22) und dem Anschlagelement (230) gegen das benannte Anschlagelement (230) zu komprimieren, bewegt zu werden.

7. Anlage (1) nach Anspruch 1, **dadurch gekennzeichnet, dass** die genannten Lagervorrichtungen (21) mindestens einen auf dem genannten Endförderband (20) positionierten Zähler (60) umfassen, der geeignet ist, den genannten ersten Stellantrieb (22) zu betätigen, um die genannte Gruppe (43) von Abschnitten (41) gegen das genannte Anschlagselement (230) zu komprimieren, wenn eine festgelegte Anzahl Abschnitte (41) erreicht ist.

8. Anlage (1) nach Anspruch 1, **dadurch gekennzeichnet, dass** der genannte Manipulator (26) mindestens eine zweite Trägerstruktur umfasst, die die genannte Entnahmezange (27) hält und betätigt werden kann, um mit Hilfe eines dritten Stellantriebs (262) zwischen mindestens einer zweiten erhobenen Position, in der die genannte Entnahmezange (27) sich auf einer Höhe ohne Berührung mit den genannten Abschnitten (41) über dem genannten Endförderband (20) befindet, und einer zweiten gesenkten Position, in der die genannte Entnahmezange (27) geeignet ist, die genannte Gruppe (43) von Abschnitten (41) zu entnehmen, die sich gegen das genannte Anschlagelement (230) angesammelt haben, bewegt zu werden, wobei die genannte zweite Trägerstruktur betätigt werden kann, um sich in der genannten zweiten erhobenen Position von einer ersten Position auf dem genannten Anschlagelement (230) in eine zweite Position auf dem genannten Schneidwerkzeug (25) zu bewegen.

9. Anlage nach Anspruch 1, **dadurch gekennzeichnet, dass** die genannten Fördervorrichtungen (13) Folgendes umfassen:
- mindestens ein vor dem genannten Endförderband (20) und nach den genannten Schneidvorrichtungen (15) positioniertes Zwischenförderband (19), das geeignet ist, die genannten Abschnitte (41) der Platten (40) horizontal zu tragen;
- mindestens zwei seitlich zu dem genannten Zwischenförderband (29) angeordnete Zentrierbänder (30), welche Zentrierbänder (30) auf die Querenden der genannten Abschnitte (41) von Platten (40) wirken, um diese auf dem genannten Zwischenförderband (29) zu zentrieren.

10. Verfahren zur Herstellung von Platten für elektrische Speicherbatterien, das Folgendes umfasst:
- mindestens einen Schritt des Bestreichens von miteinander in Folge in einem Endlosband (3) aus Blei verbundenen Gittern mit einer Paste aus aktivem Stoff, wobei eine kontinuierliche Aufeinanderfolge von Platten (40) erzeugt wird, die von Transportvorrichtungen (13) in einer Vorschubrichtung gehalten werden;
- mindestens einen Schneidschritt, um das genannte Endlosband (3) mit Messern (16) in Abschnitte (41) zu trennen;
wobei der genannte Schneidschritt das genannte Endlosband (3) mit Schnitten quer zur Vorschubrichtung des genannten Endlosbands (3) trennt, wobei Abschnitte (41) mit mindestens zwei oder mehr quer nebeneinander liegenden und miteinander verbundenen Platten (40) erzeugt werden; wobei das genannte Verfahren **dadurch gekennzeichnet ist, dass** es außerdem Folgendes umfasst:
- einen Lagerschritt, bei dem die genannten Abschnitte (41) von Platten (40), die auf den genannten Fördervorrichtungen (13) befördert werden, in aus einer bestimmten Anzahl von Abschnitten (41) bestehenden Gruppen (43) mit Hilfe mindestens eines ersten entlang des genannten Endförderbands (20) mit abwechselnder Bewegung beweglichen ersten Stellantriebs (22) gegen ein Anschlagelement (230) gepackt werden;
- einen Trennschritt, bei dem mindestens ein mit einer Entnahmezange (27) ausgestatteter Manipulator (26) die genannten Gruppen (43) von Abschnitten (41) von Platten (40), die auf dem genannten Anschlagelement (230) gepackt sind, auf wiederholte Weise gegen ein Schneidwerkzeug (25) bewegt, das die genannten Gruppen (43) von Abschnitten (41) von Platten (40) in einzelne Gruppen (44) von voneinander getrennten Platten (40) trennt.

## Revendications

1. Installation (1) de fabrication de plaques pour batteries de stockage électrique comprenant :
- au moins une bobine (5) de bande continue (3) de grilles (4) en plomb ;
- des moyens d'enduction (6) pour enduire au moins une partie desdites grilles (4) avec une pâte de matière active en réalisant une suite continue de plaques (40) assemblées les unes aux autres ;
- des moyens de découpe (15) pour séparer grâce à des couteaux (16) ladite bande continue (3) en tronçons (41) :
- des moyens de stockage (21) pour empiler des groupes (43) de tronçons (41) de plaques (40) ;
- des moyens de transport (13) pour faire avancer ladite bande continue (3) et lesdites plaques (40) parmi lesdites moyens d'enduction (6), lesdits moyens de découpe (15) et lesdites moyens de stockage (21) ;
lesdits moyens de découpe (15) séparant ladite bande continue (3) transversalement à l'avancement de ladite bande (3) en tronçons (41) d'au moins deux ou plusieurs plaques (40) transversalement accolées et reliées les unes aux autres ;
**caractérisée en ce que** :
- lesdites moyens de transport (13) comportent au moins un transporteur à bande final (20) associé auxdits moyens de stockage (21),
- lesdits moyens de stockage (21) comportent au moins un premier actionneur (22) mobile le long dudit transporteur à bande final (20) avec un mouvement alternatif susceptible d'empaqueter par groupes (43), contre un élément de butée (230), lesdits tronçons (41) de plaques (40) qui avancent sur ledit transporteur à bande final (20) ;
- ladite installation (1) comprend également une station de découpe (24), laquelle est pourvue d'au moins un outil de découpe (25) et d'au moins un manipulateur (26) équipé d'au moins une pince de prélèvement (27) susceptible de déplacer d'une façon itérative lesdits groupes (43) de tronçons (41) de plaques (40), empaquetés sur ledit élément de butée (230), contre ledit outil de découpe (25) pour séparer lesdits groupes (43) de tronçons (41) de plaques en groupes (44) de plaques (40) distinctes.

2. Installation (1) selon la revendication 1, **caractérisée en ce que** ledit transporteur à bande final (20) soutient lesdits tronçons (41) en position inclinée ou verticale.

3. Installation (1) selon la revendication 2, **caractérisée en ce que** les plaques (40) desdits tronçons (41) de plaques (40) sont assemblées les unes aux autres par l'intermédiaire de jonctions transversales amincies (10) aptes à former les contacts électriques des plaques individuelles (40) ; ledit transporteur à bande finale (20) contenant des courroies parallèles lesquelles supportent lesdits tronçons (41) de plaques (40) en position inclinée ou verticale suspendues en correspondance desdites jonctions transversales amincies (10).

4. Installation (1) selon la revendication 3, **caractérisée en ce que** ledit outil de découpe (25) comprend une ou plusieurs lames circulaires (25') espacées les unes des autres en correspondance desdites jonctions transversales amincies (10) parmi les plaques (40) accolées desdits groupes (43) de tronçons (41) de plaques (40.

5. Installation (1) selon l'une quelconque des revendications précédentes, **caractérisée en ce que** lesdits tronçons (41) de plaques (40) sont séparés de ladite bande continue (3) en files de plaques individuelles (40) transversalement accolées.

6. Installation (1) selon la revendication 1, **caractérisée en ce que** lesdits moyens de stockage (21) comportent au moins une première structure de support (59), laquelle supporte ledit premier actionneur (22) et elle est actionnable à se déplacer grâce à un deuxième actionneur (23) entre un positon soulevée, dans laquelle ledit premier actionneur (22) est agencé en dehors de l'encombrement d'interférence desdits tronçons (41) qui avancent le long dudit transporteur à bande finale (20), et une première position abaissée, dans laquelle ledit premier actionneur (22) est susceptible d'intercepter lesdits tronçons (41) qui avancent le long dudit transporteur à bande final (20) et il est actionnable à compacter contre ledit élément de butée (230) le groupe (43) de tronçons (41) interposés entre ledit premier actionneur (22) et ledit élément de butée (230).

7. Installation (1) selon la revendication 1, **caractérisée en ce que** lesdits moyens de stockage (21) comprennent au moins un compteur (60) placé en correspondance dudit transporteur à bande finale (20) susceptible d'actionner ledit premier actionneur (22) à compacter ledit groupe (43) de tronçons (41) contre ledit élément de butée (230) lorsque il rejoint un nombre préfixé de tronçons (41).

8. Installation (1) selon la revendication 1, **caractérisée en ce que** ledit manipulateur (26) comprend au moins une deuxième structure de support, laquelle structure supporte ladite pince de prélèvement (27) et elle est actionnable à se déplacer par l'intermédiaire d'un troisième actionneur (262) entre une deuxième position soulevée, dans laquelle ladite pince de prélèvement (27) est à un niveau de non interférence avec lesdits tronçons (41) au-dessus dudit transporteur a bande final (20), et une deuxième position abaissée, dans laquelle ladite pince de prélèvement (27) est susceptible de prélever ledit groupe (43) de tronçons (41) entassés contre ledit élément de butée (230), ladite deuxième structure de support étant actionnable à se déplacer, dans ladite deuxième position soulevée, d'une première position en correspondance dudit élément de butée (230) vers une deuxième position en correspondance dudit outil de découpe (25).

9. Installation (1) selon la revendication 1, **caractérisée en ce que** lesdits moyens de transport (13) comportent :
- au moins un transporteur à bande intermédiaire (19) placé en amont dudit transporteur à bande final (20) et en aval desdits moyens de découpe (15) et susceptible de soutenir lesdits tronçons (41) de plaques (40) horizontalement ;
- au moins deux bandes de centrage (30) agencées sur le côté dudit transporteur à bande intermédiaire (29), lesquelles bandes de centrage (30) agissent sur les extrémités transversales desdits tronçons (41) de plaques (40) pour les centrer sur ladite transporteur à bande intermédiaire (29).

10. Procédé de fabrication de plaques pour batteries de stockage électrique, comprenant :
- au moins une phase d'enduction de grilles liées les unes aux autres par séquence dans une bande continue (3) en plomb grâce à une pâte en matière active en réalisant une séquence continue de plaques (40) supportées par de moyens de transport (13) dans une direction d'avancement ;
- au moins une phase de découpe pour séparer grâce à des couteaux (16) ladite bande continue (3) en de tronçons (41) ;
ladite phase de découpe séparant ladite bande continue (3) par de découpes transversaux à la direction d'avancement de ladite bande continue (3), produisant des tronçons (41) d'au moins deux ou plusieurs plaques (40) accolées transversalement et reliés les unes aux autres ;
ledit procédé étant **caractérisé en ce qu'**il comprend également :
- une phase de stockage, dans laquelle lesdits tronçons (41) de plaques (40) qui avancent sur lesdits moyens de transport (13) sont empaquetés contre un élément de butée (230) par groupes (43) composés par un nombre prédéfini de tronçons (41), par l'intermédiaire d'au moins un premier actionneur (22) mobile le long dudit transporteur à bande final (20) par un mouvement alternatif ;
- une phase de séparation dans laquelle au moins un manipulateur (26) équipé d'une pince de prélèvement (27) déplace d'une façon itérative lesdits groupes (43) de tronçons (41) de plaques (40), empaquetés sur ledit élément de butée (230), contre un outil de découpe (25), lequel sépare lesdits groupes (43) de tronçons (41) de plaques (40) en groupes individuels (44) de plaques (40) séparées les unes des autres.
